# EUROPEAN PATENT APPLICATION

(11) **EP 4 826 607 A1**
(43) Date of publication of application: **21.10.2026**
(21) Application number: 25472014.7
(22) Date of filing: 16.04.2025
(51) Int. Cl.: G06Q 10/02, G06Q 10/20, G06Q 30/0282, G06Q 50/10

(54) **SYSTEM FOR ONLINE BOOKING OF CAR SERVICE SERVICES WITH INTEGRATED RATING AND ONLINE CONSULTATION**

(71) Applicant: NIKA SIE EOOD, 4700 Smolian (BG)
(72) Inventor: Nikolov, Zdravko, 4700 Smolian (BG)
(74) Representative: Nikolov, Vladislav Zdravkov

(57) **Abstract**

The system connects users with car repair services, offering functionalities such as appointment booking, service rating, online consultations with mechanics, and automated workshop management.

## Description

### Technical field

The invention relates to software and technological systems for managing services specialized in car repair shops, in particular to platforms for online booking of car repair services, which include a rating system, the possibility of online consultation with mechanics, and automated management of car repair shops.

### Prior art

There are various service booking platforms, but most of them are not specialized for car repair shops and do not offer full integration with a rating system and online consultation. There is no centralized way to manage car repair shops, which leads to inefficiency in finding quality services and complicates communication between users and the relevant specialists.

### Summary of the invention

The task of the present invention is to provide an advanced system that:
- Makes it easier for users to book an appointment at car service stations through an integrated online booking system.
- Allows users to leave ratings and comments on the services provided, which increases transparency and trust in car service stations.
- Enables online consultation with mechanics, which saves time and resources for users and service stations.
- Automates the management of car service stations through a central interface that synchronizes all system activities.

This task is solved by creating an online booking system for car service stations, including interconnected with the ability to exchange data:
- a database with car service stations categorized by specialization, associated with the ability to receive information from multiple external user devices,
- an interface for managing service reservations from multiple external user devices,
- a logical block for a rating system for evaluating car service stations, associated with the ability to receive information from multiple external user devices. Preferably, the system includes a logical block for online consultation with a communication module, connected to the ability to provide a chat or video connection between external user devices in real time.

Preferably, the system includes a logical block for payment, connected to the ability to receive and transmit information with the database, the interface and an external banking device.

Preferably, the system includes a logical block for GPS navigation to an entered address of a car service in the database.

Preferably, the system includes a logical block for sending notifications to an external user device

The advantages of the system for online reservation of car service services with integrated rating and online consultation are as follows:
Convenience and accessibility for users
   - Easy access to car services: The system provides a centralized database of car services, which allows users to find the services that meet their needs through easy navigation and filters by specialization.
   - Online reservation: Users can reserve a service appointment directly through the system, which eliminates the need for phone calls or visits to the service. This saves time and effort.
   - Online Consultation: The ability to chat or video consult with a mechanic gives users the opportunity to get advice or diagnostics before visiting the service center, which can help resolve issues with their vehicles faster.
Increased Transparency and Trust
   - Rating System: Users can leave ratings and reviews for car repair shops, which increases service transparency and helps new customers make an informed decision. This also motivates car repair shops to provide high quality services to maintain good reviews.
   - Service History: The system offers a history of repairs and services performed for each user, which gives a complete picture of previous interactions and service.
Automation and Efficiency for Car Repair Shops
   - Automated Reservation Management: The system automates the booking processes, freeing car repair shop resources from the need to manage phone inquiries and process reservations manually.
   - Centralized Management: Car repair shops get a central interface through which they can track all reservations, assessments and consultations, which increases their efficiency and facilitates customer management.
Integrations with additional services
   - Integration with navigation maps: The system offers the ability to directly navigate to the selected car repair shop via GPS and maps, which makes it easier for users to find the repair shop.
   - Integration with insurance companies: The system can be integrated with insurers to easily process service claims, which saves time for both users and car repair shops.
Flexibility and multiple payment options
   - Variety of payment methods: The system supports various payment methods, including bank cards, digital wallets and payment on site, which provides convenience for users and car repair shops.
   - Automated reminders: The system sends reminders for upcoming reservations via SMS or email, which reduces the chance of missing important visits or services.
Promotions and discounts support
   - Promotions and discounts: Car repair shops can offer promotions and discounts through the system, which is attractive to users and can increase the number of reservations.
   - Flexibility for car repair shops: They can adjust their services and prices in an easy way, which gives them a competitive advantage in the market.
Scalability and growth
   - Expansion of the car repair shop network: The system allows for easy addition of new car repair shops and expansion of services in different geographical areas, which facilitates network growth and increases consumer access to more choice.
Increased customer satisfaction
   - End-to-end service management: The system offers everything needed for efficient customer service - from booking an appointment to consultation and payment, thus increasing consumer satisfaction and loyalty to car repair shops.

These advantages make the system innovative and useful for both consumers and car repair shops, contributing to better management of car repair services and improving the customer experience.

### Exemplary embodiments of the invention

The invention is a system that includes the following main components:
- Service station database - Stores information about registered service stations, with each facility categorized according to its specialization (e.g. engines, chassis, electronics).
- Reservation management interface - Logical blocks that allow users to book hours for specific services.
- Rating system logical block - Users can leave ratings and comments about service stations, which creates a basis for trust and transparency.
- Online consultation logical block with communication module - A mechanism for chat or video consultation with mechanics, allowing users to receive advice before or after a repair.
- GPS navigation logical block - Provides guidance to the selected service station using geographic maps and navigation technologies.
- Payment logical block - Allows users to pay for services directly through the system, including online or on-site payment options.

### Method of operation of the online car service reservation system

The online car service reservation system is an integrated platform that provides easy access to car services, online consultations and reservations through multiple interconnected components. Each component of the system is designed to work in sync with the others, allowing data exchange and optimization of service to users and car services:
Car service database
   - Function: The database contains information about all registered car services, including their specializations (e.g. engines, chassis, electronics, etc.), working hours and contact details.
   - Interaction: The database is connected to multiple external user devices (mobile phones, computers) that send requests for information about available car services, services and reservations. Data from user devices is received and processed to provide up-to-date information about the selected services.
Reservation management interface
   - Function: The reservation management interface allows users to book appointments at car services via a web or mobile application.
   - Interaction: The platform accepts booking requests from user devices, connects them to the appropriate car repair shop in the database, and generates booking confirmations in real time. All booking data is stored and managed centrally.
Rating system
   - Function: A rating system allows users to rate the car repair shops they have used by leaving comments and reviews.
   - Interaction: The rating system logic block accepts ratings and comments from external user devices, which are stored in the database. These ratings affect the visibility of the shops on the platform and help other users make an informed decision.
Online consultation module
   - Function: The online consultation module provides real-time communication between users and mechanics via chat or video connection.
   - Interaction: The consultation logic block is connected to the communication module, which provides a communication channel between user devices and car repair shops. The user can ask questions and receive advice or diagnostics from the mechanic before arriving at the service.
Payment logic block
   - Function: The payment logic block manages the payment process for the services provided by the car repair shops.
   - Interaction: The payment logic block is connected to the car repair shop database, the booking interface and external banking devices (e.g. mobile banks, payment cards). The user can make the payment through the platform, and the information about the payment made is exchanged between the system and the relevant external devices.
GPS navigation logic block
   - Function: The GPS navigation logic block provides information about the route to the selected car repair shop.
   - Interaction: The logic block is connected to the database by retrieving the address of the car repair shop that is selected by the user. It then provides navigation instructions through integration with maps or navigation applications on external user devices, such as mobile phones or GPS systems.
Notification logic block
   - Function: The Notification Logic Block informs users of important events, such as booking confirmations, reminders for upcoming visits, and new reviews of car repair shops.
   - Interaction: The Logic Block communicates with external user devices and sends notifications via SMS, email, or push notifications. This ensures that users are always informed of booking updates or other important events.

The system's operating method involves the synchronous operation of all components, with each part interconnected and exchanging data in real time to provide users and car repair shops with efficient and convenient service. The system components, including the database, booking interface, rating system, consultations, payments, GPS navigation and notifications, work together to ensure a smooth and efficient process of booking and servicing car services.

## Claims

1. An online car service booking system comprising interconnected components capable of data exchange:
- a database of car repair shops categorized by specialization and capable of receiving data from multiple external user devices,
- a booking management interface capable of receiving data from multiple external user devices,
- a rating logic block for evaluating repair shops, capable of receiving input from multiple external user devices.

2. The system according to claim **1,** further comprising a logic block for online consultation with a communication module, providing real-time chat or video connection between external user devices.

3. The system according to any of the preceding claims, further comprising a payment logic block capable of data exchange with the database, the interface, and an external banking device.

4. The system according to any of the preceding claims, further comprising a GPS navigation logic block for guiding to the workshop address stored in the database.

5. The system according to any of the preceding claims, further comprising a notification logic block for sending alerts to external user devices.
